(19)

Europäisches Patentamt
European Patent Office
Office européen des brevets

(11) **EP 4 495 845 A1**

(12) **EUROPEAN PATENT APPLICATION**
published in accordance with Art. 153(4) EPC

(43) Date of publication:
**22.01.2025 Bulletin 2025/04**

(21) Application number: **22931947.0**

(22) Date of filing: **14.03.2022**

(51) International Patent Classification (IPC):
*G06N 20/00* (2019.01)

(52) Cooperative Patent Classification (CPC):
**G06N 20/00**

(86) International application number:
**PCT/JP2022/011268**

(87) International publication number:
**WO 2023/175662 (21.09.2023 Gazette 2023/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventor: **SONODA, Ryosuke**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **TRAINING DATA GENERATION PROGRAM, TRAINING DATA GENERATION METHOD, AND INFORMATION PROCESSING DEVICE**

(57) Training data in consideration of fairness is generated by calculating an occurrence probability of a value of a second attribute other than a first attribute of a plurality of attributes, for each of a first value and a second value of the first attribute of the plurality of attributes included in data, selecting the single or the plurality of second attributes from among the plurality of attributes, based on a loss function including a parameter indicating a difference between the occurrence probabilities respectively for the first value and the second value, and generating the training data based on the single or the plurality of attributes.

FIG. 1

**Description**

TECHNICAL FIELD

The present invention relates to a technology for generating training data in consideration of fairness.

BACKGROUND ART

In a case where high-dimensional data is handled by a machine learning model (clustering, classification, or the like), accuracy degradation and instability of a model often become problems, due to noise and a high calculation amount of the data. Therefore, feature selection for reducing dimensions of the data in advance has been actively studied.

In the feature selection, only features necessary for well approximating an information amount of the high-dimensional data are selected.

As a method for realizing the feature selection, for example, dimension compression has been known. The dimension compression applies a continuous weight to each dimension of an original feature and generates a new feature of a lower dimension. Note that new interpretation is needed for the generated feature.

The feature selection applies a weight of zero or one (sparse) to each dimension of the original feature and selects a feature. New interpretation is not needed for the selected feature.

Since the data after the feature selection has a lower dimension than the original data, reduction in a calculation amount and noise removal can be realized. Furthermore, the data after the feature selection has high interpretability.

In recent years, the machine learning models (clustering, classification, or the like) have been implemented in the society and used in more decision-making processes (medical decision, loan examination, university entrance examination, criminal region prediction, or the like). In such a case, it is necessary to consider fairness, in addition to model prediction accuracy, in order to comply with laws and ethics.

Fairness of machine learning is defined as that prediction of a machine learning model is fair for each protection group based on a protection attribute of data. The protection attribute is an attribute such as race or gender, that should not be discriminated, based on laws and expertise. Furthermore, the protection group is a group obtained by dividing the data by the protection attribute.

Here, many fairness technologies for unsupervised training have not been developed yet as compared with fairness technologies for supervised training. However, unsupervised training has a wide application range and a large social impact.

For example, since large-scale data does not include a teacher label, it is difficult to apply supervised fairness. Furthermore, there are many types of machine learning (unsupervised training) performed without using the teacher label. Such an example includes clustering and feature selection. Moreover, as a preprocessing stage to machine learning, unsupervised training is often used. Such an example includes prior training and feature selection.

In this way, technology development for ensuring the fairness of unsupervised training is important.

Since data (original data) used for the feature selection is manually created, the data often includes a bias to the protection group. Therefore, there is a possibility that the data after the feature selection includes a bias, if the feature selection is applied to the original data. It has been found that the bias affects the machine learning model and causes unfair results for the protection group.

Therefore, fair feature selection for adding fairness to the feature selection is important. The fair feature selection is problem-defined as trade-off evaluation between an approximation rate to the original data and the fairness of the data after approximation, with respect to the number of feature selections. That is, it is requested to achieve both of the accuracy and the fairness.

For example, a method has been known for using a convex optimization framework for fair unsupervised feature selection. In such a method, a kernel function is used to estimate nonlinear correlation of a high-dimensional feature X.

Specifically, a loss function L indicated in the following formula (1) is minimized.

[Expression 1]

$$L = -\rho(K, K^S) + \alpha \times \rho(K^S, K^P) - \alpha \times \rho(K^u, K^P) + \beta(\|f\| + \|u\|) \quad \cdots (1)$$

The reference K is a matrix obtained by applying a kernel function k to a matrix X.

The reference $\rho$ is a function for obtaining a kind of a covariance and is, for example,

$\rho(K, K^s) = \mathrm{Tr}(HKHHK^SH) = \mathrm{Tr}(HKHK^S)$.

The reference Tr represents a trace of a matrix. For example,

for $A \in R^{n \times n}$, $\mathrm{Tr}(A) = \Sigma^n_{i=1} a_{ii}$.

The references $\alpha$ and $\beta$ are hyperparameters.

In a high-dimensional space, it is assumed that a non-linear relationship that is generally difficult to estimate by a linear function exist, and a vector u G {0, 1}$^d$ used to select an "unselected feature" is introduced.

CITATION LIST

PATENT DOCUMENT

Patent Document 1: Japanese Laid-open Patent Publication No. 10-63635
Patent Document 2: Japanese National Publication of International Patent Application No. 2021-501384
Patent Document 3: U.S. Patent Application Publication No. 2017/0213153
Patent Document 4: U.S. Patent No. 11048727

NON-PATENT DOCUMENT

Non-Patent Document 1: Xiaoying Xing, Hongfu Liu, Chen Chen, Jundong Li, "Fairness-Aware Unsupervised Feature Selection",[online], June 4, 2021, [Searched on January 25, 2022], Internet <URL: https://arxiv.or g/abs/2106.02216>

SUMMARY OF INVENTION

TECHNICAL PROBLEM

However, in such a typical fairness technology with respect to unsupervised training, it is not possible for a non-linear correlation constraint to constantly ensure fairness.
In the above formula (1), particularly, since both of a selection feature and a protection attribute to be a base of kernel matrices $K^S$ and $K^Z$ are low dimensional (z << d' << d), there is a case where linear correlation is considered. Since the non-linear correlation assumes a high dimension, the non-liner correlation is overfitted. Furthermore, there is a high possibility that an erroneous constraint due to spurious correlation that does not consider a cause and effect is imposed.
Therefore, in the fairness technology for typical unsupervised training, there is a possibility that regularization does not function well and it is not possible to remove a bias from a selection feature matrix $X^s$. Furthermore, there is a problem that each of four types of kernel matrices has a large calculation amount.
In one aspect, an object of the present invention is to generate training data in consideration of fairness.

SOLUTION TO PROBLEM

Therefore, this training data generation program causes a computer to execute processing including calculating an occurrence probability of a value of a second attribute other than a first attribute of a plurality of attributes, for each of a first value and a second value of the first attribute of the plurality of attributes included in data, selecting a single or a plurality of the second attributes from among the plurality of attributes, based on a loss function that includes a parameter that indicates a difference between the occurrence probabilities respectively for the first value and the second value, and generating training data, based on the single or the plurality of attributes.

ADVANTAGEOUS EFFECTS OF INVENTION

According to an embodiment, it is possible to generate training data in consideration of fairness.

BRIEF DESCRIPTION OF DRAWINGS

FIG. 1 is a diagram schematically illustrating a configuration of an information processing device as an example of an embodiment.
FIG. 2 is a flowchart for explaining training processing of a feature function of the information processing device as an example of the embodiment.
FIG. 3 is a diagram illustrating respective occurrence probabilities of two groups classified based on approximate data generated by feature selection performed by the information processing device as an example of the embodiment, in comparison with a typical method.

FIG. 4 is a diagram illustrating probability densities of respective selection features of the two groups classified based on the approximate data generated by the feature selection performed by the information processing device as an example of the embodiment, in comparison with a typical method.

FIG. 5 is a diagram illustrating a hardware configuration of the information processing device as an example of the embodiment.

DESCRIPTION OF EMBODIMENTS

Hereinafter, embodiments of a training data generation method program, a training data generation method, and an information processing device will be described with reference to the drawings. Note that the embodiments described below are merely examples, and there is no intention to exclude application of various modifications and techniques not explicitly described in the embodiments. That is, the present embodiments may be variously modified and implemented in a range without departing from the spirit thereof. Furthermore, each drawing is not intended to include only the components illustrated in the drawing, and may include other functions and the like.

(A) Configuration

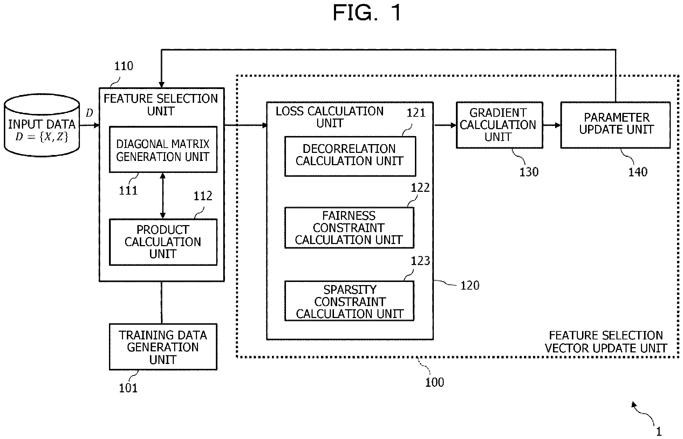

FIG. 1 is a diagram schematically illustrating a configuration of an information processing device 1 as an example of the embodiment.

As illustrated in FIG. 1, the information processing device 1 has functions as a feature selection unit 110, a loss calculation unit 120, a gradient calculation unit 130, a parameter update unit 140, and a training data generation unit 101.

Training data D is input to the feature selection unit 110. The training data D is training data used to train a machine learning model. The training data D may be also referred to as input data D. The training data D may be expressed as training data $D = \{X, Z\}$.

The reference X is a feature matrix, and $X \in R^{n \times d}$. X corresponds to a first attribute of a plurality of attributes included in the data (input data).

The reference Z is a protection attribute matrix, and $Z \in R^{n \times}$. Z corresponds to a second attribute, other than the first attribute, of the plurality of attributes included in the data (input data).

For n data sets, each data i is represented by a d-dimensional feature vector $X_i \in R^{1 \times d}$ and a z-dimensional protection attribute vector $Z_i \in R^{1 \times z}$.

The feature selection unit 110 selects a feature matrix $X^s$ from the feature matrix X included in the training data D, using a feature selection vector f. The selected feature matrix $X^s$ may be referred to as a selection feature matrix $X^s$.

The feature selection unit 110 has functions as a diagonal matrix generation unit 111 and a product calculation unit 112.

The diagonal matrix generation unit 111 generates a diagonal matrix F of the feature selection vector f.

$F = diag(f)$ is satisfied, and diag represents diagonalization of a vector.

The product calculation unit 112 calculates a product XF of a product of the feature matrix X and the diagonal matrix F.

The selection feature matrix $X^s = XF$.

The loss calculation unit 120, the gradient calculation unit 130, and the parameter update unit 140 implement functions as a feature selection vector update unit 100. The feature selection vector update unit 100 updates a feature function f used by the feature selection unit 110, in consideration of fairness.

The loss calculation unit 120 calculates a loss function $L_{ours}$ for the selection feature matrix $X^s$ selected by the feature selection unit 110.

The loss function $L_{ours}$ is expressed by the following formula (2).

[Expression 2]

$$L_{\text{ours}} = -\rho(\mathbf{K}, \mathbf{K}^s) + \alpha_u |(\mu_+ - \mu_-)F|^2 + \alpha_s |F(\Sigma_+ - \Sigma_-)F^T|^2 + \beta \|f\| \quad \cdot \cdot \cdot (2)$$

The references $\alpha_u$ and $\alpha_s$ are hyperparameters for fairness constraint adjustment, and the reference $\beta$ is a hyperparameter for sparsity constraint adjustment.

As illustrated FIG. 1, the loss calculation unit 120 has functions as a decorrelation calculation unit 121, a fairness constraint calculation unit 122, and a sparsity constraint calculation unit 123.

The decorrelation calculation unit 121 calculates $\rho(K, K^s)$ of the formula of the loss function $L_{ours}$ indicated by the above formula (2).

$$\rho \ (K, \ K^s) \ = \ Tr \ (HKHHK^sH) \ = \ Tr \ (HKHK^s)$$

The decorrelation calculation unit 121 calculates non-linear correlation between the original feature matrix X and the selection feature matrix $X^s$.

The reference Tr is a trace of a matrix.

For example, for A E R$^{<(n \times n)}$, Tr (A) = $\Sigma^n_{i=1} a_{ii}$.

Furthermore, the following $H_n$ is defined.

[Expression 3]

$$\mathbf{H}_n = \mathbf{I} - \frac{1}{n}\mathbf{1}\mathbf{1}^{\mathrm{T}},$$

I: Unit matrix, 1: Vector of all components 1

For example, in a case where n = 1 or 2, the following is obtained.

[Expression 4]

$$\mathbf{H}_1 = [0], \mathbf{H}_2 = \begin{bmatrix} 1 & 0 \\ 0 & 1 \end{bmatrix} - \frac{1}{2}\begin{bmatrix} 1 & 1 \\ 1 & 1 \end{bmatrix} = \frac{1}{2}\begin{bmatrix} 1 & 0 \\ 0 & 1 \end{bmatrix}$$

The reference AB is a product of a matrix A and a matrix B.

The reference K is a matrix obtained by applying a kernel function k to a matrix X.

$$K_{ij} \ = \ k \ (X_i, \ X_j), \ K \ \in \ R^{n \times n}$$

The reference k is a kernel function and may be, for example, a polynomial kernel or a Radial Basis Function kernel to be described below.

[Expression 5]

Example) Polynomial kernel: $\kappa(X_i, X_j) = \left(1 + X_i^{\mathrm{T}}, X_j\right)^m, \ m \in \mathbb{Z}^+$

Example) RBF kernel: $\kappa(X_i, X_j) = \exp\left(-\frac{\|x_i - x_j\|^2}{2\sigma^2}\right)$

The fairness constraint calculation unit 122 calculates $a_u | (\mu_+ - \mu_-) F |^2 + a_s | (\Sigma_+ - \Sigma_-) F |^2$ of the formula of the loss function $L_{ours}$ indicated by the above formula (2).

The fairness constraint calculation unit 122 incorporates a fairness metrics $\Delta$ into the formula of the loss function $L_{ours}$, as a direct constraint. The fairness metrics $\Delta$ is expressed by the following formula (3).

$\Delta = \sup_t | P (h (X_i^s) \le t | Z_i = 1) - P (h (X_i^s) \le t | Z_i = 0) |... (3)$

h: R$^{d'} \to$ {0, 1}: may be a simple linear classifier such as a support vector machine (SVM).

It is assumed that a classifier h has a parameter w and, for example, h $(X^s) = w^T X^s$ is output.

P (h $(X_i^s) \le t | Z_i = 1$) is an occurrence probability of a first value (G+) of the protection attribute, and P (h $(X_i^s) \le t | Z_i = 0$) is an occurrence probability of a second value (G_) of the protection attribute.

This setting can be easily made by another machine learning model, for example, a kernel SVM or the like.

t: is a threshold used by the classifier.

In the fairness metrics, how much the protection attribute is distinguished is evaluated, using the selected feature matrix $X^s$. The fairness metrics represents a Kolmogorov distance that is a total variation distance of probability accuracy used to measure a distance between two probability distributions.

A minimization problem $minL_{ours}$ is applied to the loss function $L_{ours}$ expressed by the following formula (4).

[Expression 6]

$$L_{ours} = -\rho(K, Ks) + \alpha\Delta + \beta \| f \| \quad \cdots (4)$$

By incorporating the fairness metrics $\Delta$ into the formula of the loss function $L_{ours}$ as the direct constraint, it is possible to remove a bias of a result, regardless of a type of correlation.

Furthermore, since it is not necessary to consider a function u and moreover, kernel matrices $K^u$ and $K_P$ are similar, it is possible to reduce the calculation amount.

However, since a constraint $\Delta$ based on the fairness metrics uses a function (unit step) that is not differentiable, it is difficult to optimize the constraint $\Delta$.

Therefore, an upper limit of the fairness metrics $\Delta$ is obtained, and the minimization problem of $\Delta$ is approximated, as indicated in the following formula (5).

$$\Delta \leq | (\mu_+ - \mu_-) F |^2 + | F (\Sigma_+ - \Sigma_-) F^T |^2 \quad \ldots \quad (5)$$

However, for two groups $G+ = \{i \mid Z_i = 1\}$ and $G_- = \{i \mid Z_i = 0\}$, each of $\mu_+$ and $\mu_-$ is an average vector, and each of $\Sigma_+$ and $\Sigma_-$ is a variance covariance matrix.

The average vectors $\mu_+$ and $\mu_-$ can be expressed by the following formula, for example.

[Expression 7]

$$\mu_+ = \frac{1}{|G_+|} \sum_{i \in G_+}^{n} X_i$$

$$\mu_- = \frac{1}{|G_-|} \sum_{i \in G_-}^{n} X_i$$

Furthermore, the variance covariance matrices $\Sigma_+$ and $\Sigma_-$ can be expressed by the following formula, for example.

[Expression 8]

$$\Sigma_+ = \frac{1}{|G_+|} \sum_{i \in G_+}^{n} (X_i - \mu_+)(X_i - \mu_+)^T$$

$$\Sigma_- = \frac{1}{|G_-|} \sum_{i \in G_-}^{n} (X_i - \mu_-)(X_i - \mu_-)^T$$

Proof of the above formula (5) is indicated below.

From $\Delta = \sup_t | P (h (X_i^s) \leq t \mid Z_i = 1) - P (h (X_i^s) \leq t \mid Z_i = 0) |$, $X^s = XF$, $h (X^s) = w^T X^s$, $\Delta = \sup_t | P (w^T XF \leq t \mid Z = 1) - P (w^T XF \leq t \mid Z = 0) | = \sup_t | P (w^T X_+ F \leq t) - P (w^T X_- F \leq t) |$ (6)

However, $X_+ = \{X_i \mid Z_i = 1\}$ and $X_- = \{X_i \mid Z_i = 0\}$ are random variable vectors.

The right side of the above formula (6) is the total variation distance. Therefore, when an inequality of Pinsker is applied, it can be expressed by the following formula (7).

[Expression 9]

$$\Delta \leq \sqrt{\frac{1}{2} \mathbb{KL}(w^T X_- F \| w^T X_+ F)} \quad \cdots (7)$$

$\mathbb{KL}$ : Kullback-Leibler Information amount

If it is assumed as

[Expression 10]

$$X_+ \sim \mathcal{N}(\mu_+, \Sigma_+), X_- \sim \mathcal{N}(\mu_-, \Sigma_-)$$

, the right side of the inequality indicated by the above formula (7) can be expressed by the following formula.

[Expression 11]

$$\text{Right side} = \sqrt{\frac{1}{4}\left(\frac{s_-}{s_+} + \frac{(m_+ - m_-)^2}{s_+} + \log\frac{s_+}{s_-} - 1\right)}$$

$$s_+ = \mathbf{w}^{\mathrm{T}} F \Sigma_+ F^T \mathbf{w}, \ \ s_- = \mathbf{w}^{\mathrm{T}} F \Sigma_- F^T \mathbf{w}$$

$$m_+ = \mathbf{w}^{\mathrm{T}} \mu_+ F, \ \ m_- = \mathbf{w}^{\mathrm{T}} \mu_- F$$

In this way, minimizing $\Delta$ can be approximated by minimizing one of or both of $s_+$ and $s_-$ or $m_+$ and $m_-$.

Note that, since the reference w is the parameter of the classifier h, w is set to be out of a range of minimization.

Furthermore, in the above embodiment, the formula is developed using the Gaussian distribution. However, the present invention is not limited to this, and the formula may be developed using a method other than the Gaussian distribution.

$$\begin{aligned}
\min (s_+ - s_-) &= \min (\mathrm{w^T F \Sigma_+ F^T w - w^T F \Sigma_- F^T w}) \\
&= \min (\mathrm{F \Sigma_+ F^T - F \Sigma_- F^T}) \\
&= \min \mathrm{F} (\Sigma_+ \mathrm{F^T - \Sigma_-}) \mathrm{F^T} \\
&= \min | \mathrm{F} (\Sigma_+ \mathrm{F^T - \Sigma_-}) \mathrm{F^T} |^2
\end{aligned}$$

$|F(\Sigma_+ F^T - Z_-) F^T|$ can be interpreted as a constraint (first constraint) that brings a variance of features of the two groups to the selected feature matrix $X^s$.

$$\begin{aligned}
\min (m_+ - m_-) &= \min (\mathrm{w^T \mu_+ F - w^T \mu_- F}) \\
&= \min (\mu_+ \mathrm{F} - \mu_- \mathrm{F}) \\
&= \min \mathrm{F} (\mu_+ - \mu_-) \mathrm{F} \\
&= \min | (\mu_+ - \mu_-) \mathrm{F} |^2
\end{aligned}$$

$|(\mu_+ - \mu_-) F|$ can be interpreted as a constraint (second constraint) that brings an average of the features of the two groups, to the selected feature matrix $X^s$.

The fairness constraint calculation unit 122 approximates a minimization problem of a difference between occurrence probabilities respectively for the first value (G+) and the second value (G_) (distance between distributions: $\Delta = \sup_t | P(h(X_i^s) \leq t | Z_i = 1) - P(h(X_i^s) \leq t | Z_i = 0) |$), based on the first constraint $((\Sigma_+ - \Sigma_-) F^T |)$ and the second constraint $(| (\mu_+ - \mu_-) F |)$.

The sparsity constraint calculation unit 123 calculates $\beta || f ||$ of the formula of the loss function $L_{ours}$ indicated by the above formula (2). A sparse constraint is a constraint used to set the feature selection vector f to $\{0, 1\}^d$.

The sparsity constraint calculation unit 123 can calculate $\beta || f ||$ with a known method, and detailed description thereof is omitted.

The gradient calculation unit 130 calculates a gradient $\partial L_{our} / \partial f$, based on the above formula (4).

The parameter update unit 140 updates a parameter of the feature selection vector f, using the gradient calculated by the gradient calculation unit 130. The parameter update unit 140 updates the parameter using a gradient method.

The parameter update unit 140 optimizes the parameter so as to reduce a loss, in the loss function $L_{ours}$ indicated by the above formula (4), for example, using a gradient descent method.

The loss function $L_{ours}$ indicated by the formula (4) includes the difference between the occurrence probabilities respectively for the first value $G_+$ and the second value $G_-$ (distance between distributions: $\Delta = \sup_t | P(h(X_i^s) \leq t | Z_i = 1) - P(h(X_i^s) \leq t | Z_i = 0) |$). That is, the loss function $L_{ours}$ includes a parameter representing the difference between the occurrence probabilities respectively for G+ (first value) and $G_-$ (second value) (distance between distributions: $\Delta = \sup_t | P(h(X_i^s) \leq t | Z_i = 1) - P(h(X_i^s) \leq t | Z_i = 0) |$).

The parameter update unit 140 optimizes the parameter of the loss function $L_{ours}$ so as to reduce the loss, in the loss function $L_{ours}$ indicated by the formula (4). Therefore, the loss function $L_{ours}$ includes a condition that the difference between the occurrence probabilities respectively for the first value G+ and the second value G_ (distance between distributions) is reduced.

Then, the parameter update unit 140 updates the parameter of the feature selection vector f.

Processing for updating the parameter of the feature selection vector f by the parameter update unit 140 can be expressed by the following formula.

[Expression 12]

$$f \leftarrow f - \eta \frac{\partial L_{\text{ours}}}{\partial f}$$

The reference $\eta$ is a hyperparameter of a training rate.

The feature selection vector f reflects the loss function $L_{\text{ours}}$ indicated by the formula (4), and furthermore, the loss function $L_{\text{ours}}$ reflects the difference between the occurrence probabilities respectively for the first value G+ and the second value G_ (distance between distributions: $\Delta = \text{supt} \mid P (h (X_i^s) \leq t \mid Z_i = 1) - P (h (X_i^s) \leq t \mid Z_i = 0) \mid$).

Until the feature selection vector f converges, the feature selection vector update unit 100 repeats the selection of the selection feature matrix $X^s$ by the feature selection unit 110, the calculation of the loss function $L_{\text{ours}}$ by the loss calculation unit 120, the calculation of the gradient $\partial L_{\text{our}} / \partial f$ by the gradient calculation unit 130, and the parameter update of the feature selection vector f.

Whether or not the feature selection vector f is converged can be confirmed by a known method, and description thereof is omitted.

The feature selection unit 110 performs fair feature selection using the trained feature selection vector f. As a result, it is possible to realize the fair feature selection for high-dimensional data.

The training data generation unit 101 generates training data based on one or more features (selection feature matrix $X^s$) selected by the feature selection unit 110.

Fairness of the data of the one or more selection feature matrices $X^s$ output is ensured by using the trained feature selection vector f for the input data by the feature selection unit 110. As a result, the machine learning model trained using the training data generated by using the selection feature matrix $X^s$ realizes fairness. The training data generated by the training data generation unit 101 is training data that has a low dimension and a high approximation rate with the original data (input data) and simultaneously achieves the fairness of the approximated data.

(B) Operation

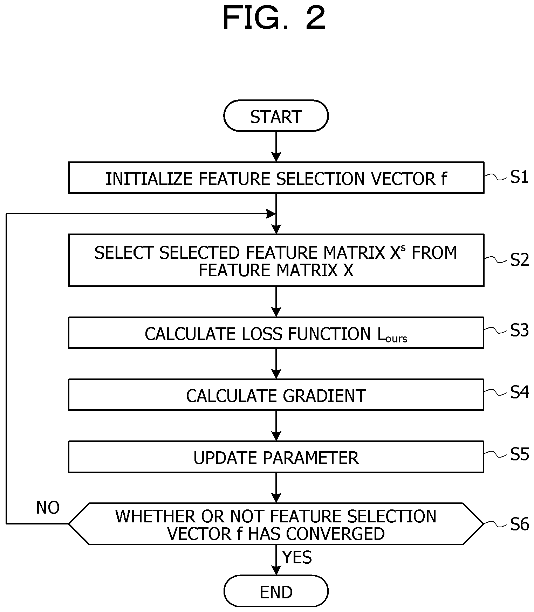

Training processing of the feature selection vector f by the information processing device 1 as an example of the embodiment configured as described above will be described according to the flowchart (steps S1 to S6) illustrated in FIG. 2.

In step S1, the feature selection vector f is initialized. The parameter of the feature selection vector f may be initialized using any value.

In step S2, the input data (observation data D) is input into the feature selection unit 110, and the feature selection unit 110 selects the selection feature matrix $X^s$ from the feature matrix X included in the observation data D using the feature selection vector f.

In step S3, the loss calculation unit 120 calculates the loss function $L_{\text{ours}}$ using the above formula (2) .

In step S4, the gradient calculation unit 130 calculates the gradient $\partial L_{\text{our}} / \partial f$ based on the loss function $L_{\text{ours}}$ calculated by the loss calculation unit 120.

In step S5, the parameter update unit 140 updates the parameter of the feature selection vector f based on the gradient calculated by the gradient calculation unit 130.

In step S6, the feature selection vector update unit 100 (refer to FIG. 1) confirms whether or not the feature selection vector f has converged.

As a result of the confirmation, in a case where the feature selection vector f does not converge (refer to NO route in step S6), the procedure returns to step S2, and the feature selection unit 110 selects a new selection feature matrix $X^s$.

On the other hand, in a case where the feature selection vector f has converged (refer to YES route in step S6), the processing ends.

Thereafter, the feature selection unit 110 inputs the training data into the trained feature selection vector f and performs fair feature selection. The training data generation unit 101 generates the training data based on the one or more features selected in this way.

(C) Effects

In this way, according to the information processing device 1 as an example of the embodiment, by using the fairness metrics as the direct constraint, it is possible to improve the fairness $\Delta$ regardless of the type of correlation.

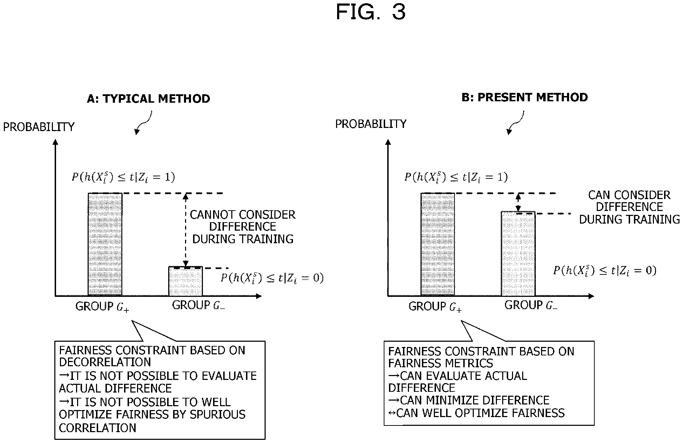

FIG. 3 is a diagram illustrating respective occurrence probabilities of two groups G+ and G_ classified based on the approximate data generated by the feature selection performed by the information processing device 1 as an example of the embodiment, in comparison with a typical method.

In FIG. 3, a reference A indicates an occurrence probability $P(h(X_i^s) \leq t \mid Z_i = 1)$ of the group G+ and an occurrence probability $P(h(X_i^s) \leq t \mid Z_i = 0)$ of G_ with the typical method. Furthermore, a reference B indicates the occurrence probability $P(h(X_i^s) \leq t \mid Z_i = 1)$ of the group G+ and the occurrence probability $P(h(X_i^s) \leq t \mid Z_i = 0)$ of G_ with the information processing device 1.

In the method by the information processing device 1, by using the fairness constraint based on the fairness metrics, it is possible to evaluate an actual difference between the occurrence probabilities of the groups G+ and G_, and it is possible to minimize the difference. As a result, the fairness can be well optimized. The difference between the occurrence probabilities of the groups G+ and G_ can be considered during training, and an unfair state in which the difference between the occurrence probabilities is small is obtained. That is, it is possible to improve the fairness.

On the other hand, in the typical method, a fairness constraint based on decorrelation is used. Therefore, it is not possible to evaluate an actual difference between the occurrence probabilities of the groups G+ and G_. As a result, it is not possible to well optimize the fairness by spurious correlation. The difference between the occurrence probabilities of the groups G+ and G_ cannot be considered during training, and an unfair state is obtained.

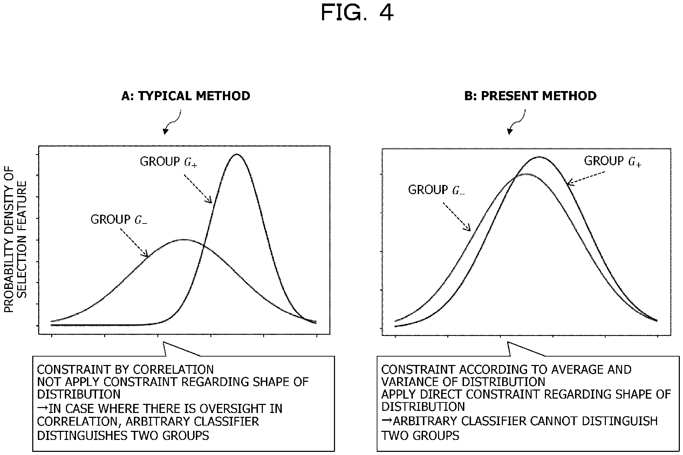

FIG. 4 is a diagram illustrating probability densities of the respective selection features of the two groups G+ and G_ classified based on the approximate data generated by the feature selection performed by the information processing device 1 as an example of the embodiment, in comparison with the typical method.

In FIG. 4, a reference A indicates a distribution of the probability density of the selection feature matrix $X^s$ of the group G+ and a distribution of the probability density of the selection feature matrix $X^s$ of G_, with the typical method. Furthermore, a reference B indicates a distribution of the probability density of the selection feature matrix $X^s$ of the group G+ and a distribution of the probability density of the selection feature matrix $X^s$ of G_, with the information processing device 1.

In the method by the information processing device 1, by using the constraint according to an average and a variance of the distribution, a direct constraint regarding a shape of the distribution of the probability density of the selection feature matrix $X^s$ is applied. As a result, it is not possible for an arbitrary classifier to distinguish the two groups G+ and G_. That is, it is possible to make it difficult to distinguish the selection feature matrix $X^s$ according to the protection attribute, regardless of the type of correlation, and the fairness can be realized.

On the other hand, in the typical method, a fairness constraint based on decorrelation is used. Therefore, a constraint regarding the shape of the distribution of the probability density of the selection feature matrix $X^s$ is not applied. As a result, in a case where there is an oversight in the correlation, an arbitrary classifier distinguishes the two groups G+ and G_, and unfairness occurs.

(D) Others

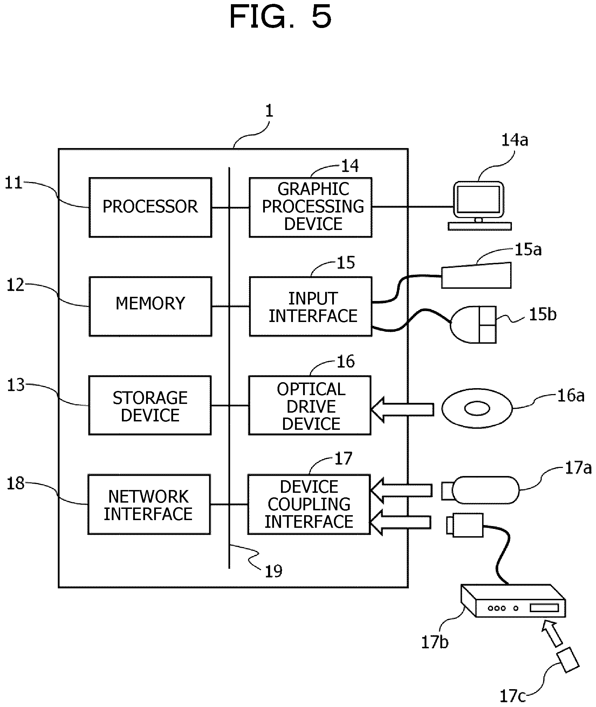

FIG. 5 is a diagram illustrating a hardware configuration of the information processing device 1 as an example of the embodiment.

The information processing device 1 is a computer, and includes, as its components, a processor 11, a memory 12, a storage device 13, a graphic processing device 14, an input interface 15, an optical drive device 16, a device coupling interface 17, and a network interface 18, for example. Those components 11 to 18 are configured to be communicable with each other via a bus 19.

The processor (control unit) 11 controls the entire information processing device 1. The processor 11 may be a multiprocessor. The processor 11 may be any one of a central processing unit (CPU), a micro processing unit (MPU), a digital signal processor (DSP), an application specific integrated circuit (ASIC), a programmable logic device (PLD), a field programmable gate array (FPGA), and a graphics processing unit (GPU), for example. Furthermore, the processor 11 may be a combination of two or more types of elements of the CPU, MPU, DSP, ASIC, PLD, FPGA, and GPU.

Then, the processor 11 executes a control program (training data generation program: not illustrated) for the information processing device 1 so as to implement the functions as the feature selection unit 110, the loss calculation unit 120, the gradient calculation unit 130, the parameter update unit 140, and the training data generation unit 101, illustrated in FIG. 1.

Note that the information processing device 1 executes, for example, a program (training data generation program and OS program) recorded in a non-transitory computer-readable recording medium so as to implement the functions as the feature selection unit 110, the loss calculation unit 120, the gradient calculation unit 130, the parameter update unit 140, and the training data generation unit 101, described above.

The programs in which processing content to be executed by the information processing device 1 is written may be recorded in various types of recording media. For example, the programs to be executed by the information processing device 1 may be stored in the storage device 13. The processor 11 loads at least some of the programs in the storage device 13 into the memory 12, and executes the loaded program.

Furthermore, the programs to be executed by the information processing device 1 (processor 11) may be recorded in a non-transitory portable recording medium such as an optical disk 16a, a memory device 17a, or a memory card 17c. The programs stored in a portable recording medium may be executed after being installed into the storage device 13, under the control of the processor 11, for example. Furthermore, the processor 11 may directly read the program from the portable recording medium and execute it.

The memory 12 is a storage memory including a read only memory (ROM) and a random access memory (RAM). The RAM of the memory 12 is used as a main storage device of the information processing device 1. The RAM temporarily stores at least some of the programs to be executed by the processor 11. Furthermore, the memory 12 stores various types of data needed for processing by the processor 11.

The storage device 13 is a storage device such as a hard disk drive (Hard Disk Drive: HDD), a solid state drive (SSD), or a storage class memory (Storage Class Memory: SCM), and stores various types of data.

The storage device 13 stores the OS programs, the control programs, and various types of data. The control program includes the training data generation program.

Note that a semiconductor storage device, such as an SCM or a flash memory, may be used as an auxiliary storage device. Furthermore, redundant arrays of inexpensive disks (RAID) may be configured using a plurality of the storage devices 13.

In the storage device 13, data generated in a process of the processing by at least one of the feature selection unit 110, the loss calculation unit 120, the gradient calculation unit 130, the parameter update unit 140, and the training data generation unit 101 may be stored.

The graphic processing device 14 is coupled to a monitor 14a. The graphic processing device 14 displays an image on a screen of the monitor 14a in response to an instruction from the processor 11. Examples of the monitor 14a include a display device using a cathode ray tube (CRT), a liquid crystal display device, and the like.

The input interface 15 is coupled to a keyboard 15a and a mouse 15b. The input interface 15 transmits signals sent from the keyboard 15a and the mouse 15b to the processor 11. Note that the mouse 15b is an example of a pointing device, and another pointing device may be used. Examples of the another pointing device include a touch panel, a tablet, a touch pad, a track ball, and the like.

The optical drive device 16 reads data recorded in the optical disk 16a, using laser light or the like. The optical disk 16a is a non-transitory portable recording medium in which data is recorded in a readable manner by reflection of light. Examples of the optical disk 16a include a digital versatile disc (DVD), a DVD-RAM, a compact disc read only memory (CD-ROM), a CD-recordable (R)/rewritable (RW), and the like.

The device coupling interface 17 is a communication interface for coupling a peripheral device to the information processing device 1. For example, the memory device 17a and a memory reader/writer 17b may be coupled to the device coupling interface 17. The memory device 17a is a non-transitory recording medium having a function for communicating with the device coupling interface 17, and is, for example, a universal serial bus (USB) memory. The memory reader/writer 17b writes data to the memory card 17c, or reads data from the memory card 17c. The memory card 17c is a card-type non-transitory recording medium.

The network interface 18 is coupled to a network. The network interface 18 transmits and receives data via the network. Other information processing devices, communication devices, and the like may be coupled to the network.

Then, the disclosed technology is not limited to the embodiment described above, and various modifications may be made and implemented in a range without departing from the gist of the present embodiment. Each configuration and each processing of the present embodiment may be selected or omitted as needed, or may be appropriately combined.

For example, in the embodiment, as the method for approximating the minimization problem of the fairness metrics $\Delta$, the method based on the inequality of Pinsker indicated in the above formula (4) is used. However, the present invention is not limited to this, and the method can be appropriately changed and implemented. For example, an approximation method using a function such as a sigmoid function or a hinge function may be used. Furthermore, an approximation method using sampling such as Monte Carlo sampling may be used.

Furthermore, those skilled in the art may carry out or manufacture the present embodiment according to the disclosure described above.

REFERENCE SIGNS LIST

1       information processing device

11      processor (control unit)
12      memory
13      storage device
14      graphic processing device
14a     monitor
15      input interface
15a     keyboard
15b     mouse
16      optical drive device
16a     optical disk
17      device coupling interface
17a     memory device
17b     memory reader/writer
17c     memory card
18      network interface
19      bus
100     feature selection vector update unit
101     training data generation unit
110     feature selection unit
111     diagonal matrix generation unit
112     product calculation unit
120     loss calculation unit
121     decorrelation calculation unit
122     fairness constraint calculation unit
123     sparsity constraint calculation unit
130     gradient calculation unit
140     parameter update unit

**Claims**

1.  A training data generation program for causing a computer to execute processing comprising:

    calculating an occurrence probability of a value of a second attribute other than a first attribute of a plurality of attributes, for each of a first value and a second value of the first attribute of the plurality of attributes included in data;
    selecting a single or a plurality of the second attributes from among the plurality of attributes, based on a loss function that includes a parameter that indicates a difference between the occurrence probabilities respectively for the first value and the second value; and
    generating training data, based on the single or the plurality of attributes.

2.  The training data generation program according to claim 1, for causing the computer to execute processing further comprising:

    approximating a minimization problem of the difference between the occurrence probabilities respectively for the first value and the second value based on
    a first constraint that approximates a variance of the second attributes of two groups that include a group of values of the first attribute and a group of values of the second attribute to the selected second attribute and
    a second constraint that approximates an average of the second attributes of the two groups to the selected second attribute.

3.  A training data generation method, wherein a computer executes processing comprising:

    calculating an occurrence probability of a value of a second attribute other than a first attribute of a plurality of attributes, for each of a first value and a second value of the first attribute of the plurality of attributes included in data;
    selecting a single or a plurality of the second attributes from among the plurality of attributes, based on a loss function that includes a parameter that indicates a difference between the occurrence probabilities respectively for the first value and the second value; and
generating training data, based on the single or the plurality of attributes.

4. The training data generation method according to claim 3, for causing the computer to execute processing further comprising:

approximating a minimization problem of the difference between the occurrence probabilities respectively for the first value and the second value based on
a first constraint that approximates a variance of the second attributes of two groups that include a group of values of the first attribute and a group of values of the second attribute to the selected second attribute and
a second constraint that approximates an average of the second attributes of the two groups to the selected second attribute.

5. An information processing device comprising: a control unit configured to execute processing including

calculating an occurrence probability of a value of a second attribute other than a first attribute of a plurality of attributes, for each of a first value and a second value of the first attribute of the plurality of attributes included in data,
selecting a single or a plurality of the second attributes from among the plurality of attributes, based on a loss function that includes a parameter that indicates a difference between the occurrence probabilities respectively for the first value and the second value, and
generating training data, based on the single or the plurality of attributes.

6. The information processing device according to claim 5, wherein

the control unit executes processing including
approximating a minimization problem of the difference between the occurrence probabilities respectively for the first value and the second value based on
a first constraint that approximates a variance of the second attributes of two groups that include a group of values of the first attribute and a group of values of the second attribute to the selected second attribute and
a second constraint that approximates an average of the second attributes of the two groups to the selected second attribute.

FIG. 1

# FIG. 2

START

INITIALIZE FEATURE SELECTION VECTOR f — S1

SELECT SELECTED FEATURE MATRIX $X^s$ FROM FEATURE MATRIX X — S2

CALCULATE LOSS FUNCTION $L_{ours}$ — S3

CALCULATE GRADIENT — S4

UPDATE PARAMETER — S5

WHETHER OR NOT FEATURE SELECTION VECTOR f HAS CONVERGED — S6

NO

YES

END

FIG. 3

**A: TYPICAL METHOD**

PROBABILITY

$P(h(X_i^s) \le t | Z_i = 1)$

CANNOT CONSIDER
DIFFERENCE
DURING TRAINING

$P(h(X_i^s) \le t | Z_i = 0)$

GROUP $G_+$    GROUP $G_-$

FAIRNESS CONSTRAINT BASED ON
DECORRELATION
→IT IS NOT POSSIBLE TO EVALUATE
ACTUAL DIFFERENCE
→IT IS NOT POSSIBLE TO WELL
OPTIMIZE FAIRNESS BY SPURIOUS
CORRELATION

**B: PRESENT METHOD**

PROBABILITY

$P(h(X_i^s) \le t | Z_i = 1)$

CAN CONSIDER
DIFFERENCE
DURING TRAINING

$P(h(X_i^s) \le t | Z_i = 0)$

GROUP $G_+$    GROUP $G_-$

FAIRNESS CONSTRAINT BASED ON
FAIRNESS METRICS
→CAN EVALUATE ACTUAL
DIFFERENCE
→CAN MINIMIZE DIFFERENCE
↔CAN WELL OPTIMIZE FAIRNESS

# FIG. 4

**A: TYPICAL METHOD**

PROBABILITY DENSITY OF SELECTION FEATURE

GROUP $G_+$

GROUP $G_-$

CONSTRAINT BY CORRELATION
NOT APPLY CONSTRAINT REGARDING SHAPE OF DISTRIBUTION
→IN CASE WHERE THERE IS OVERSIGHT IN CORRELATION, ARBITRARY CLASSIFIER DISTINGUISHES TWO GROUPS

**B: PRESENT METHOD**

GROUP $G_+$

GROUP $G_-$

CONSTRAINT ACCORDING TO AVERAGE AND VARIANCE OF DISTRIBUTION
APPLY DIRECT CONSTRAINT REGARDING SHAPE OF DISTRIBUTION
→ARBITRARY CLASSIFIER CANNOT DISTINGUISH TWO GROUPS

# FIG. 5

## INTERNATIONAL SEARCH REPORT

| | International application No. |
|---|---|
| | **PCT/JP2022/011268** |

**A. CLASSIFICATION OF SUBJECT MATTER**

***G06N 20/00***(2019.01)i
FI:   G06N20/00 160

According to International Patent Classification (IPC) or to both national classification and IPC

**B. FIELDS SEARCHED**

Minimum documentation searched (classification system followed by classification symbols)

G06N3/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | US 2021/0383268 A1 (DISCOVER FINANCIAL SERVICES) 09 December 2021 (2021-12-09)<br>  entire text, all drawings | 1-6 |
| A | 神嶌敏弘、外1名, 機械学習・データマイニングにおける公平性, 人工知能, 01 March 2019, vol. 34, no. 2, pages 196-204, (KAMISHIMA, Toshihiro and 1 other. Fairness in Machine Learning and Data Mining. Journal of the Japanese Society for Artificial Intelligence.)<br>  entire text | 1-6 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 May 2022** | **31 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/011268**

| Patent document cited in search report | Publication date (day/month/year) | Patent family member(s) | Publication date (day/month/year) |
|---|---|---|---|
| US 2021/0383268 A1 | 09 December 2021 | (Family: none) | |

Form PCT/ISA/210 (patent family annex) (January 2015)

**EP 4 495 845 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10063635 A
- JP 2021501384 A
- US 20170213153
- US 11048727 B

**Non-patent literature cited in the description**

- **XIAOYING XING** ; **HONGFU LIU** ; **CHEN CHEN** ; **JUNDONG LI**. *Fairness-Aware Unsupervised Feature Selection*, 04 June 2021, https://arxiv.org/abs/2106.02216